# EUROPEAN PATENT APPLICATION

(11) **EP 4 783 047 A1**
(43) Date of publication of application: **29.07.2026**
(21) Application number: 25766196.7
(22) Date of filing: 06.06.2025
(51) Int. Cl.: G06F 21/57, G06F 21/60

(54) **SERVER STARTUP VERIFICATION SYSTEM**

(30) Priority: 10.12.2024 CN 202411812509
(71) Applicant: Suzhou Metabrain Intelligent Technology Co., Ltd., Suzhou, Jiangsu 215000 (CN)
(72) Inventor: WANG, Minglei, Suzhou, Jiangsu 215000 (CN)
(74) Representative: Studio Torta S.p.A.
(86) International application number: PCT/CN2025/099669
(87) International publication number: WO 2026/123618

(57) **Abstract**

An example of the present disclosure provides a server boot verification system. The system includes: a system boot device and a target verifier, where the system boot device includes a system controller, a management controller, a switch, and a memory, target boot firmware of a server system is stored in the memory, and target verification information of the server system is stored in the target verifier. The switch is configured to control the system controller to connect with the memory in a case where the server system is booted, and control the management controller to connect with the memory in a case where boot firmware stored in the memory is to be updated. The system controller is configured to access the target verifier and the memory in a case where the server system is booted, and perform verification on the target boot firmware by using the target verification information. Through the present disclosure, the problem of low security at a boot stage of a server in the related art is solved, and an effect of an improvement in the security at the boot stage of the server is achieved.

## Description

### Cross-Reference to Related Application

The present disclosure claims the priority to Chinese Patent Application No. 202411812509.6 filed with the Chinese Patent Office on December 10, 2024 and entitled "Server Boot Verification System", which is incorporated herein in its entirety by reference.

### Technical Field

Examples of the present disclosure relate to the field of computers, and in particular, to a server boot verification system.

### Background

A boot stage of a server is an initial link of a running cycle of a system, and its security will directly affect the subsequent running process of the system. Hence, the security verification on a boot process of the server is crucial to the secure running of the server system. In the related art, the architecture of the server generally adopts the configuration that a management controller and a system controller are connected to a memory. In this configuration, the management controller is used to update and maintain boot firmware stored in the memory, and the system controller is used to invoke the boot firmware from the memory when the system is booted. However, under this architecture, a data error or corruption of the boot firmware is likely to occur since the management controller and the system controller probably invoke the memory simultaneously. Further, due to the tempering risk of the boot firmware in the memory, the system controller is likely to invoke the tampered boot firmware to boot the system, resulting in low security in the boot stage of the server.

### Summary

An example of the present disclosure provides a server boot verification system for at least solving the problem of low security at a boot stage of a server in the related art.

According to an example of the present disclosure, a server boot verification system is provided. The system includes:
a system boot device and a target verifier, where the system boot device includes a system controller, a management controller, a switch, and a memory; the management controller, the system controller, and the memory are connected to the switch, and the target verifier is connected to the system boot device; target boot firmware of a server system is stored in the memory, and target verification information of the server system is stored in the target verifier; and the target verification information is configured to indicate firmware data of boot firmware allowed to be used when the server system is booted;
the switch is configured to control the system controller to connect with the memory in a case where the server system is booted, and control the management controller to connect with the memory in a case where boot firmware stored in the memory is to be updated; and
the system controller is configured to access the target verifier and the memory in a case where the server system is booted, and perform verification on the target boot firmware by using the target verification information.

Optionally, the target verifier is connected to a connection link between the system controller and the switch.

Optionally, the server boot verification system further includes a reference verifier, where the reference verifier is connected to a connection link between the management controller and the switch, reference verification information of the server system is stored in the reference verifier, and the reference verification information is configured to indicate firmware data of boot firmware allowed to be written to the memory; and
the management controller is configured to access the reference verifier in a case where the boot firmware stored in the memory is to be updated, perform verification on reference boot firmware to be updated to the memory by using the reference verification information, and access the memory and update the reference boot firmware to the memory in a case where the reference boot firmware passes the verification.

Optionally, the server boot verification system further includes a synchronization controller, where the synchronization controller is connected to the reference verifier and the target verifier; and
the synchronization controller is configured to match a first information version of the reference verification information with a second information version of the target verification information, and use the reference verification information to update the target verification information stored in the target verifier in a case where the first information version fails to match the second information version.

Optionally, a first interface, a second interface, and a third interface are configured in the switch, the first interface is configured to be connected to the system controller, the second interface is configured to be connected to the management controller, and the third interface is configured to be connected to the memory; and
the switch is configured to control the first interface to connect with the third interface in a case where the server system is booted, and control the second interface to connect with the third interface in a case where the boot firmware stored in the memory is to be updated.

Optionally, a fourth interface is further configured in the switch, the target verifier is connected to the fourth interface, reference verification information is further stored in the target verifier, and the reference verification information is configured to indicate firmware data of boot firmware allowed to be written to the memory; and
the switch is configured to control the first interface to connect with the fourth interface in a case where the server system is booted, control the first interface to connect with the third interface in a case where the system controller accesses the target verification information stored in the target verifier, control the second interface to connect with the fourth interface in a case where the boot firmware stored in the memory is to be updated, and control the second interface to connect with the third interface in a case where the management controller accesses the reference verification information stored in the target verifier.

Optionally, the memory includes a plurality of sub-memories, and the switch is connected to each of the sub-memories; and
the plurality of sub-memories are configured to redundantly store boot firmware required to boot the server system.

Optionally, the memory further includes a storage controller, a first port of the storage controller is connected to the switch, and a second port of the storage controller is connected to each of the sub-memories; and
the storage controller is configured to control an access state of each of the sub-memories.

Optionally, the second port of the storage controller includes a plurality of sub-ports, and the sub-ports are connected to the sub-memories in one-to-one correspondence; and
the storage controller is configured to, in a case where a request for accessing a sub-memory from the sub-memories is received, select the accessed sub-memory as a target sub-memory from the sub-memories, and control a sub-port, from the sub-ports and connected to the target sub-memory, and the first port to be in a connection state.

Optionally, the storage controller includes a logic control device and a reference switch, the logic control device is connected to the reference switch, and the first port and the sub-ports are configured in the reference switch; and
the logic control device is configured to control the reference switch to adjust a state of connection or disconnection between the first port and each of the sub-ports.

Optionally, the logic control device is configured to select one or more first sub-memories in an unoccupied state from the sub-memories in a case where the request for accessing the sub-memory is received, and select the target sub-memory, whose a calling priority is higher than or equal to a target priority, from the first sub-memories according to priority information of the sub-memories in a case where the first sub-memories are selected, where the priority information is determined according to a storage performance of each of the sub-memories.

Optionally, the logic control device is further configured to detect an occupied state of each second sub-memory in a case where the request is a request for updating the boot firmware, wherein the second sub-memory is a memory in the sub-memories excluding the target sub-memory; and update updated boot firmware stored in the target sub-memory to the second sub-memory in a case where the second sub-memory is in an unoccupied state.

Optionally, the logic control device is further configured to obtain an access failure frequency at which each of the sub-memories has an access failure when accessed before a current moment; rank the sub-memories in ascending order of the access failure frequency, to obtain an access order of the sub-memories; and determine that the access order is the priority information of the sub-memories when the sub-memories are accessed.

Optionally, the target verifier is connected to a connection link between the storage controller and the switch, reference verification information of the server system is further stored in the target verifier, and the reference verification information is configured to indicate firmware data of boot firmware allowed to be written to the memory; and
the management controller is configured to access the target verifier in a case where the boot firmware stored in the memory is to be updated, perform verification on reference boot firmware to be updated to the memory by using the reference verification information, and access the memory and update the reference boot firmware to the memory in a case where the reference boot firmware passes the verification.

Optionally, the target verifier is connected to a connection link between a sub-memory and a sub-port corresponding to the sub-memory, reference verification information of the server system is further stored in the target verifier, and the reference verification information is configured to indicate firmware data of boot firmware allowed to be written to the memory; and
the management controller is configured to access the target verifier in a case where the boot firmware stored in the memory is to be updated, perform verification on reference boot firmware to be updated to the memory by using the reference verification information, and access the target sub-memory and update the reference boot firmware to the target sub-memory in a case where the reference boot firmware passes the verification.

Through the present disclosure, by deploying the switch connected among the system controller, the management controller, and the memory, the system controller is controlled to be connected to the memory in a case where the server system is booted, and the management controller is controlled to connect with the memory in a case where the boot firmware in the memory is to be updated. Thus, simultaneous access of the system controller and the management controller to the memory is effectively avoided, and data dislocation and data corruption of the boot firmware stored in the memory are avoided. In addition, by deploying the target verifier connected to the system boot device, the system controller can access the target verifier to perform the verification on the target boot firmware stored in the memory during the boot of the server system, thus avoiding the fact that the system controller uses tampered boot firmware for booting the system, and improving security of the server system during the boot. Thus, the problem of the low security at the boot stage of the server in the related art can be solved, and an effect of an improvement in the security at the boot stage of the server is achieved.

### Brief Description of the Drawings

Fig. 1 is a diagram of hardware connection of a server boot verification system according to an example of the present disclosure;
Fig. 2 is a first schematic diagram of a server boot verification system according to an example of the present disclosure;
Fig. 3 is a second schematic diagram of a server boot verification system according to an example of the present disclosure;
Fig. 4 is a third schematic diagram of a server boot verification system according to an example of the present disclosure;
Fig. 5 is a first schematic diagram of switching a connection link of a server boot verification system according to an example of the present disclosure;
Fig. 6 a second schematic diagram of switching a connection link of a server boot verification system according to an example of the present disclosure;
Fig. 7 is a fourth schematic diagram of a server boot verification system according to an example of the present disclosure;
Fig. 8 is a fifth schematic diagram of a server boot verification system according to an example of the present disclosure;
Fig. 9 is a sixth schematic diagram of a server boot verification system according to an example of the present disclosure;
Fig. 10 is a seventh schematic diagram of a server boot verification system according to an example of the present disclosure;
Fig. 11 is an eighth schematic diagram of a server boot verification system according to an example of the present disclosure;
Fig. 12 is a first schematic diagram of a system for security verification of a basic input output system (BIOS) of a server according to an example of the present disclosure;
Fig. 13 is a second schematic diagram of a system for security verification of a BIOS of a server according to an example of the present disclosure;
Fig. 14 is a first schematic diagram of an optimized system for security verification of a BIOS of a server according to an example of the present disclosure; and
Fig. 15 is a second schematic diagram of an optimized system for security verification of a BIOS of a server according to an example of the present disclosure.

### Detailed Description of the Embodiments

Examples of the present disclosure will be described in detail below with reference to accompanying drawings and in conjunction with the examples.

It should be noted that terms such as "first" and "second" in the description, the claims, and the accompanying drawings of the present disclosure are used to distinguish similar objects rather than describe a specific sequence or a sequential order.

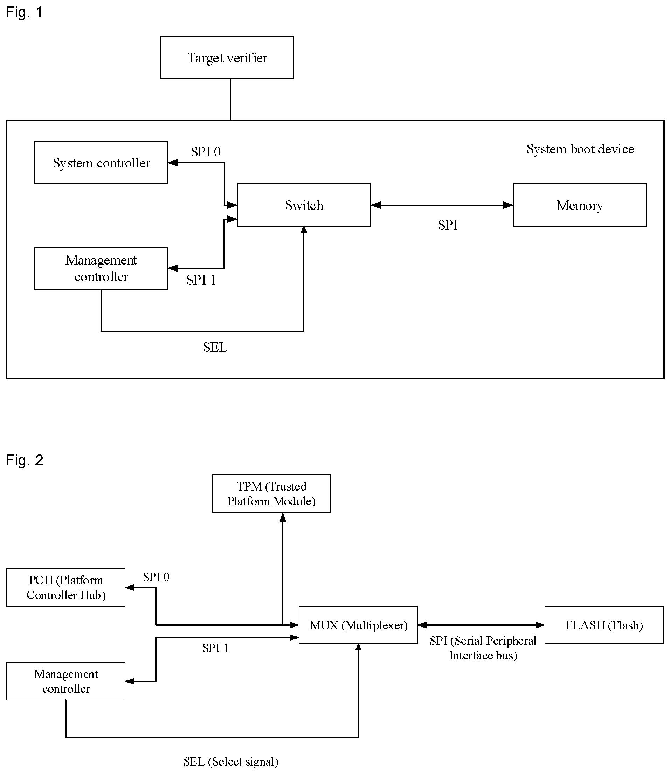

This example provides a server boot verification system. Fig. 1 is a diagram of hardware connection of the server boot verification system according to an example of the present disclosure. As shown in Fig. 1, the system includes:
a system boot device and a target verifier. The system boot device includes a system controller, a management controller, a switch, and a memory. The management controller, the system controller, and the memory are connected to the switch, and the target verifier is connected to the system boot device. Target boot firmware of a server system is stored in the memory, and target verification information of the server system is stored in the target verifier. The target verification information is configured to indicate firmware data of boot firmware allowed to be used when the server system is booted.

The switch is configured to control the system controller to connect with the memory in a case where the server system is booted, and control the management controller to connect with the memory in a case where boot firmware stored in the memory is to be updated.

The system controller is configured to access the target verifier and the memory in a case where the server system is booted, and perform verification on the target boot firmware by using the target verification information.

Through the contents described above, by deploying the switch connected among the system controller, the management controller, and the memory, the system controller is controlled to connect with the memory in a case where the server system is booted, and the management controller is controlled to be connected to the memory in a case where the boot firmware in the memory is to be updated. Thus, simultaneous access of the system controller and the management controller to the memory is effectively avoided, and data dislocation and data corruption of the boot firmware stored in the memory are avoided. In addition, by deploying the target verifier connected to the system boot device, the system controller can access the target verifier to perform the verification on the target boot firmware stored in the memory during the boot of the server system, thus avoiding the fact that the system controller uses tampered boot firmware for booting the system, and improving security of the server system during the boot. Thus, the problem of low security at the boot stage of a server in the related art can be solved, and an effect of an improvement in the security at a boot stage of the server is achieved.

Optionally, in the example of the present disclosure, the system controller is configured to communicate with the memory through the switch in a case where the server system is booted. The system controller and the switch are connected to each other through a serial peripheral interface (SPI) bus. When the system needs to be booted, the switch switches a connection link between the system controller and the memory to be in a connected state, and controls a connection link between the management controller and the memory to be in a disconnected state. Further, the system controller may load and run the boot firmware of the server system stored in the memory. In addition, during the boot, the system controller can access the target verifier, and perform validity verification on the boot firmware by using the target verification information stored in the target verifier, to guarantee that the server is booted in a secure state. In the example of the present disclosure, the system controller may be, but is not limited to, a platform controller hub (PCH) and a central processing unit (CPU), which is not limited in this solution.

Optionally, in the example of the present disclosure, the management controller is configured to be connected to the memory through the switch at an update stage of the boot firmware. Then, the management controller transmits a request for access to the memory to the switch in a case where the management controller needs to access the memory. The switch controls the connection link between the management controller and the memory to be in the connected state and control the connection link between the system controller and the memory to be in the disconnected state in a case where the request for access is received, such that the management controller can access and update the boot firmware in the memory. In a process of updating the boot firmware stored in the memory, in order to guarantee update security of the boot firmware, the management controller may communicate with the verifier to access reference verification information (the reference verification information is used for indicating firmware data of boot firmware allowed to be written to the memory) stored in the verifier, and perform validity verification on updated firmware by using the reference verification information, so as to guarantee security and integrity of the updated firmware. In the example of the present disclosure, the management controller may be, but is not limited to, a baseboard management controller (BMC) and Integrated Light-Out (iLO). The iLO is a control device with a remote server management function, and the iLO is a remote server management processor embedded in main boards of the server and a computation module. By using the iLO, the server may be monitored and controlled from a remote location. When the management controller is the iLO, remote access to the server can be achieved by accessing the iLO remotely, and then the request for access to the memory can be transmitted to the switch through external access. In addition, in a case where the switch causes the connection link between the management controller and the memory to be connected, the boot firmware in the memory is accessed through the iLO, and the boot firmware is updated and upgraded.

Optionally, in the example of the present disclosure, the switch is configured to dynamically switch a data path according to a state (booted or to be updated) of the server, so as to implement independent access of the system controller and the management controller to the memory. When the server is in the booted state, the switch connects the data path between the system controller and the memory, and when the boot firmware in the memory is in the to-be-updated state, the switch switches the data path between the system controller and the memory, thus guaranteeing independence and security of data updating. In the example of the present disclosure, the switch may be, but is not limited to, multiplexers (MUXs) and SPI bus switch integrated circuits (SPI Switch ICs), which is not limited in this solution.

Optionally, in the example of the present disclosure, the memory is configured to store the boot firmware of the server system, and the memory is connected to the system controller and the management controller through the switch, thus guarnateeing the safe and independent access to the firmware in boot and update processes. For the memory, a single memory or as a plurality of redundant memories may be designed. Through design of the plurality of redundant memories, it can be guaranteed that the system can still read data from another healthy memory even if one memory fails. For example, when the server system is booted, verification may be performed on firmware in the plurality of memories separately. If firmware data in a particular memory are found to be tampered or corrupted, the system may automatically switch to another memory to read correct firmware data, so as to prevent abnormality of the server boot due to corruption of the firmware data of a single memory. In the example of the present disclosure, the memory may be, but is not limited to, a flash, a solid state drive (SSD) and a magnetoresistive random access memory (MRAM), which is not limited in this solution.

Optionally, in the example of the present disclosure, the verifier is configured to perform security verification on firmware data stored in the memory at a boot stage of the server system and an update stage of the firmware data in the memory. The verifier stores the verification information of the server system. At the update stage of the firmware data in the memory, the management controller may communicate with the verifier at first before writing updated firmware to the memory, perform verification on the updated firmware by using the verification information in the verifier, and be merely allowed to write the updated firmware to the memory in a case where the verification passes. At the boot stage of the server system, the system controller may access the verifier at first, perform verification on the firmware data in the memory by using the verification information in the verifier, and be merely allowed to boot the server system by using the firmware data. In the example of the present disclosure, the verifier may be, but is not limited to, a trusted platform module (TPM), a secure boot ROM (SBR), which is not limited in this solution.

Optionally, in the example of the present disclosure, Fig. 1 is the diagram of hardware connection of the server boot verification system according to the example of the present disclosure. As shown in Fig. 1, the system boot device includes the system controller, the management controller, the switch, and the memory. The management controller, the system controller, and the memory are directly connected to the switch through an SPI bus, and the target verifier is connected to the system boot device. When the boot firmware in the memory needs to be updated through the management controller, the management controller may transmit a signal select (SEL) to the switcher, and then the switch switches the SPI bus path to control the management controller to connect with the memory. The management controller may load a new firmware file, communicate with the TPM before writing the firmware file to the memory, perform the validity verification on the updated firmware by using the verification information stored in the memory, and be allowed to write the updated firmware to the memory in a case where the verification passes. When the server is in the booted state, the switch is disconnected from the management controller and the memory, and switches to the path between the system controller and the memory. The system controller immediately accesses the TPM to obtain the target verification information, performs integrity and validity verification on the target boot firmware in the memory to guarantee that the firmware data completely match the verification information, and is allowed to boot the server by using the target boot firmware in a case where the verification passes.

As an optional example, the target verifier is connected to a connection link between the system controller and the switch.

Optionally, in the example of the present disclosure, Fig. 2 is a first schematic diagram of a server boot verification system according to an example of the present disclosure. As shown in Fig. 2, the TPM (the target verifier) is connected to the connection link between the PCH (the system controller) and the MUX (the switch), the PCH, the management controller, the TPM, and the FLASH (the memory) are connected through the SPI bus, and the TPM is directly connected to the PCH. The management controller and the PCH may access the FLASH independently through switching by the MUX. When the server system is in the boot stage, the MUX controls the PCH to be connected to the FLASH, and then PCH accesses the TPM located between the PCH and the MUX to obtain the target verification information stored in the TPM. The PCH performs security verification on the target boot firmware stored in the FLASH by using the target verification information, and then PCH boots the server system by using the target boot firmware in a case where the verification passes.

Through the configuration, by connecting the target verifier to the connection link between the system controller and the switcher, the validity and integrity verification can be performed on the boot firmware in the memory by the target verifier when the server system is booted, thus guaranteeing security of the server during the boot and running.

As an optional example, the server boot verification system further includes a reference verifier, wherein the reference verifier is connected to a connection link between the management controller and the switch, reference verification information of the server system is stored in the reference verifier, and the reference verification information is configured to indicate firmware data of boot firmware allowed to be written to the memory.

The management controller is configured to access the reference verifier in a case where the boot firmware stored in the memory is to be updated, perform verification on reference boot firmware to be updated to the memory by using the reference verification information, and access the memory and update the reference boot firmware to the memory in a case where the reference boot firmware passes the verification.

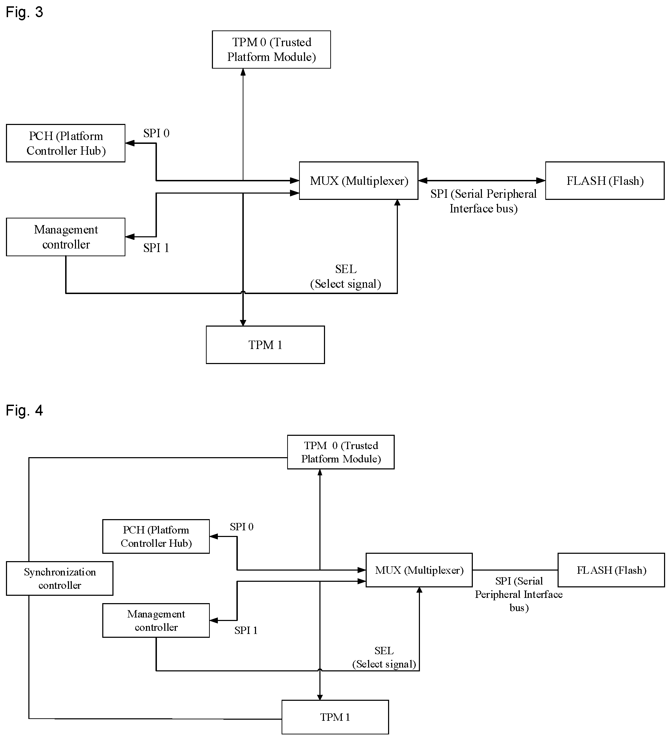

Optionally, in the example of the present disclosure, Fig. 3 is a second schematic diagram of a server boot verification system according to an example of the present disclosure. As shown in Fig. 3, the server boot verification system includes a TPM0 (the target verifier) and further includes a TPM1 (the reference verifier), and the TPM1 is connected to the connection link between the management controller and the MUX (the switch). In a case where the boot firmware in the memory is to be updated, the management controller may transmit a signal SEL to the MUX, and then the MUX may switch the path to control the management controller to connect with the FLASH after receiving the signal transmitted by the management controller. The management controller may access the TPM1 and obtain the reference verification information stored in the TPM1, and then the management controller uses the reference verification information to perform integrity and validity verification on new firmware data to be written to the FLASH before firmware used for update is written to the FLASH, and allowed to write the new firmware data to the FLASH in a case where the firmware data used for update passes the integrity and validity verification, thus completing update of the boot firmware in the FLASH. When the server is in the booted state, the MUX may disconnect the connection link between the management controller and the FLASH, and control the PCH to connect with the FLASH, and then the PCH accesses the TPM0 and obtains the target verification information stored in the TPM0. Then, the PCH performs the integrity and validity verification on the target boot firmware in the FLASH by using the target verification information, and is allowed to boot the server system by using the target boot firmware in a case where the target boot firmware passes the integrity and validity verification.

Through the configuration, by connecting the reference verifier to the connection link between the management controller and the switch, it can be guaranteed that the security verification can be performed on the boot firmware through the verifier on a corresponding link during the upgrade and boot of the server. Thus, the FLASH information is prevented from being illegally corrupted or tampered with during the upgrade of the boot firmware, and the security of the server system during the upgrade and boot is guaranteed.

As an optional example, the server boot verification system further includes a synchronization controller. The synchronization controller is connected to the reference verifier and the target verifier.

The synchronization controller is configured to match a first information version of the reference verification information with a second information version of the target verification information, and use the reference verification information to update the target verification information stored in the target verifier in a case where the first information version fails to match the second information version.

Optionally, in the example of the present disclosure, Fig. 4 is a third schematic diagram of a server boot verification system according to an example of the present disclosure. As shown in Fig. 4, the server boot verification system further includes the synchronization controller. The synchronization controller is connected to the reference verifier (TPM1) and the target verifier (TPM0). The synchronization controller is configured to monitor and maintain consistency of verification information of different verifiers of the server system.

Optionally, in the example of the present disclosure, during booting or within a specific maintenance period of the server, the synchronization controller may actively trigger synchronization of the verification information of the target verifier and the verification information of the reference verifier. The synchronization controller may read a latest first information version from the reference verifier and a latest second information version from the target verifier. Then, the synchronization controller may compare the verification information of the two versions to check whether the verification information of the two versions is consistent. In a case where the first information version and the second information version are inconsistent, the synchronization controller updates the information in the target verifier by using the latest verification information in the reference verifier, so as to guarantee that the information versions of all verifiers are consistent.

Through the configuration, by arranging the synchronization controller between the target verifier and the reference verifier, the consistency and a latest state of the verification information stored in the system can be guaranteed, risk of verification by using outdated or wrong verification information, and the security and reliability of the entire server system are further improved.

As an optional example, a first interface, a second interface, and a third interface are configured in the switch, the first interface is configured to be connected to the system controller, the second interface is configured to be connected to the management controller, and the third interface is configured to be connected to the memory.

The switch is configured to control the first interface to connect with the third interface in a case where the server system is booted, and control the second interface to connect with the third interface in a case where the boot firmware in the memory is to be updated.

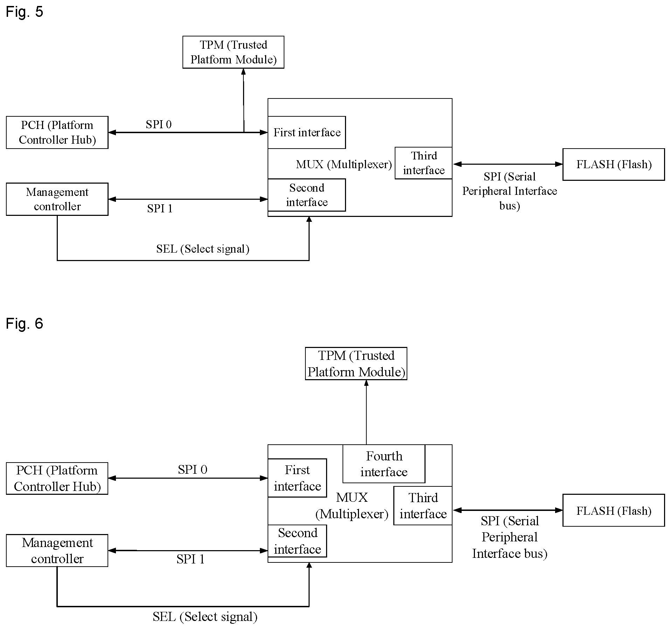

Optionally, in the example of the present disclosure, Fig. 5 is a first schematic diagram of switching a connection link of a server boot verification system according to an example of the present disclosure. As shown in Fig. 5, the first interface, the second interface, and the third interface are configured in the switch (MUX), the first interface is configured to be connected to the system controller (PCH), the second interface is configured to be connected to the management controller, and the third interface is configured to be connected to the memory (FLASH). In a case where the server system is booted, the switch (MUX) controls the first interface to be connected to the third interface, that is, the system controller (PCH) is controlled to be connected to the memory (FLASH). In a case where the boot firmware in the memory is to be updated, the switch (MUX) controls the second interface to be connected to the third interface, that is, the management controller is controlled to be connected to the memory (FLASH).

Through the configuration, the management controller and the system controller can be controlled by the switch to independently and securely access the memory. Thus, the problem that the management controller and the system controller access the memory simultaneously, resulting in an error of the boot firmware is avoided, and the security and the stability of running of the server system are improved.

As an optional example, a fourth interface is further configured in the switch, the target verifier is connected to the fourth interface, reference verification information is further stored in the target verifier, and the reference verification information is configured to indicate firmware data of boot firmware allowed to be written to the memory.

The switch is configured to control the first interface to connect with the fourth interface in a case where the server system is booted, control the first interface to connect with the third interface in a case where the system controller accesses the target verification information stored in the target verifier, control the second interface to connect with the fourth interface in a case where the boot firmware stored in the memory is to be updated, and control the second interface to connect with the third interface in a case where the management controller accesses the reference verification information stored in the target verifier.

Optionally, in the example of the present disclosure, Fig. 6 a second schematic diagram of switching a connection link of a server boot verification system according to an example of the present disclosure. As shown in Fig. 6, the fourth interface is further configured in the switch (MUX), the target verifier (TPM) is connected to the fourth interface, and in the TPM, the target verification information used for indicating a firmware data condition of boot firmware allowed to be used when the server system is booted is stored, and the reference verification information used for indicating the firmware data of the boot firmware allowed to be written to the memory is further stored.

Optionally, in the example of the present disclosure, in a case where the boot firmware in the memory is to be updated, the management controller transmits a signal SEL to the MUX, and then the MUX may control the second interface to be connected to the fourth interface, that is, the management controller is controlled to be connected to the TPM. Then, the management controller may access the TPM and obtain the reference verification information stored in the TPM. After the management controller obtains the reference verification information, the MUX controls the second interface to be connected to the third interface. That is, the management controller is controlled to be connected to the FLASH, and then the management controller performs the security verification on the new boot firmware by using the reference verification information obtained, and is allowed to write the new firmware data to the flash in a case where the verification passes. In a case where the server system is booted, the MUX disconnects the second interface from the third interface, and controls the first interface to be connected to the fourth interface, that is, the PCH is connected to the TPM. Then, the PCH may access the TPM and obtain the target verification information stored in the TPM. After the PCH obtains the target verification information, the MUX controls the first interface to be connected to the third interface, that is, the PCH is controlled to be connected to the FLASH. Then, the PCH performs the security verification on the target boot firmware in the FLASH by using the obtained target verification information, and is allowed to boot the server by using the target firmware in a case where the verification passes.

Through the configuration, by adding the fourth interface connected to the target verifier and adding control logic of the switch, the security verification can be performed simultaneously on the firmware data at the update state and the boot stage of the server through one verifier. Thus, the security of the server during the boot and update of the server is improved, and system configuration is further simplified.

As an optional example, the memory includes a plurality of sub-memories, and the switch is connected to each of the sub-memories.

The plurality of sub-memories are configured to redundantly store boot firmware required to boot the server system.

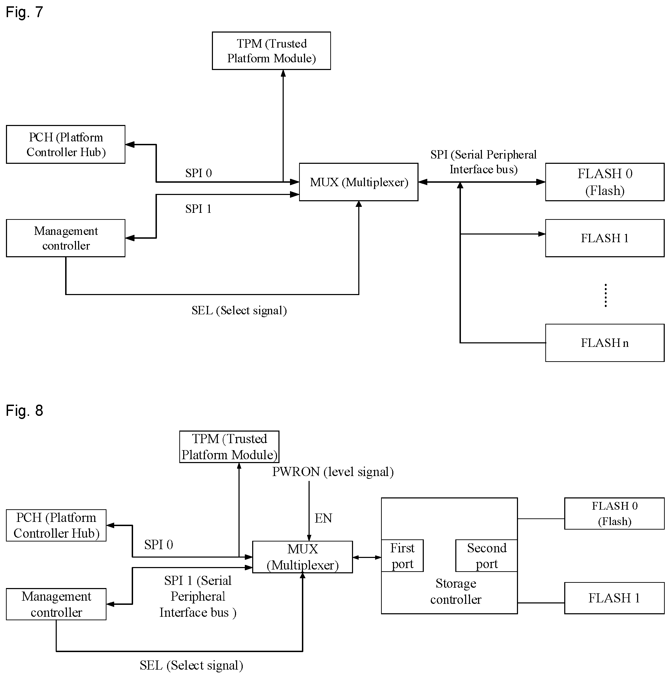

Optionally, in the example of the present disclosure, Fig. 7 is a fourth schematic diagram of a server boot verification system according to an example of the present disclosure. As shown in Fig. 7, the memory includes the plurality of sub-memories (such as a FLASHO and a FLASH1), and the switch (MUX) is connected to each of the sub-memories. Each sub-memory independently stores a complete copy of the server boot firmware. Through this design of memory of redundant storage, the system can still load the firmware from another healthy sub-memory when one or more sub-memories fail or data are corrupted, and normal boot and running of the server are guaranteed.

Through the configuration, the memory is designed to include the plurality of sub-memories, and the switch can be connected to each sub-memory. The system can be provided with higher data redundancy and fault tolerance, and the stability and security of the server are improved.

As an optional example, the memory further includes a storage controller, a first port of the storage controller is connected to the switch, and a second port of the storage controller is connected to each of the sub-memories.

The storage controller is configured to control an access state of each of the sub-memories.

Optionally, in the example of the present disclosure, Fig. 8 is a fifth schematic diagram of a server boot verification system according to an example of the present disclosure. As shown in Fig. 8, the memory further includes the storage controller, and the first port of the storage controller is connected to the switch (MUX) and is responsible for receiving a request for access and instructions from the switch (MUX). The second port of the storage controller is connected to each sub-memory (such as the FLASHO and the FLASH1), such that the access state of each sub-memory can be dynamically controlled, that is, particular sub-memories are determined to be read or written, according to the instructions of the switch.

Through the configuration, the storage controller is connected to the sub-memories in one-to-one correspondence through the second ports, such that the storage controller can independently control the access to each sub-memory without affecting the state of another sub-memory, and the security of data storage and flexibility of access control are improved.

As an optional example, the second port of the storage controller includes a plurality of sub-ports, and the sub-ports are connected to the sub-memories in one-to-one correspondence.

The storage controller is configured to, in a case where a request for accessing a sub-memory from the sub-memories is received, select the accessed sub-memory as a target sub-memory from the sub-memories, and control a sub-port, from the sub-ports and connected to the target sub-memory, and the first port to be in a connection state.

Optionally, in the example of the present disclosure, the second port of the storage controller includes the plurality of sub-ports, and the sub-ports are connected to the sub-memories in one-to-one correspondence. The storage controller may control a connection state between the switch and the plurality of sub-memories by controlling a connection state of the first port and the plurality of sub-ports. When the server is booted or the firmware needs to be updated, the system controller or management controller transmits, to the storage controller, the request for access through the switch. When the storage controller receives the request for access, the storage controller may check states of and screen the plurality of sub-memories. A master memory and a slave memory may be preset in the plurality of sub-memories, and then the state of the master memory is checked preferentially. If a current health state of the master memory is desirable, it is determined that the current master memory is the target sub-memory. If the master memory fails or suffers data corruption, the states of the plurality of slave memories are checked in turn, and a first slave memory with a desirable health state as checked is taken as the target sub-memory. In the example of the present disclosure, an access history of each sub-memory may also be checked by the storage controller, and based on the access frequency or load balance of each sub-memory, the sub-memory that is seldom accessed within a period of time may be preferentially selected as the target sub-memory, so as to avoid the problem of data overload or wear caused by accessing a same sub-memory many times in succession and implement balanced data access. Further, when the target sub-memory is determined, the storage controller may control the sub-port connected to the target sub-memory to be in a state of connection to the first port (that is, the port connected to the switch), thus allowing a data reading or writing operation.

Through the configuration, by setting the storage controller in the memory and adopting the design of one-to-one correspondence of the sub-ports to the sub-memories, the security of data storage and the flexibility of access control are improved, and the stability and the security of the server during the boot and firmware update are improved.

As an optional example, the storage controller includes a logic control device and a reference switch, the logic control device is connected to the reference switch, and the first port and the sub-ports are configured in the reference switch.

The logic control device is configured to control the reference switch to adjust a state of connection or disconnection between the first port and each of the sub-ports.

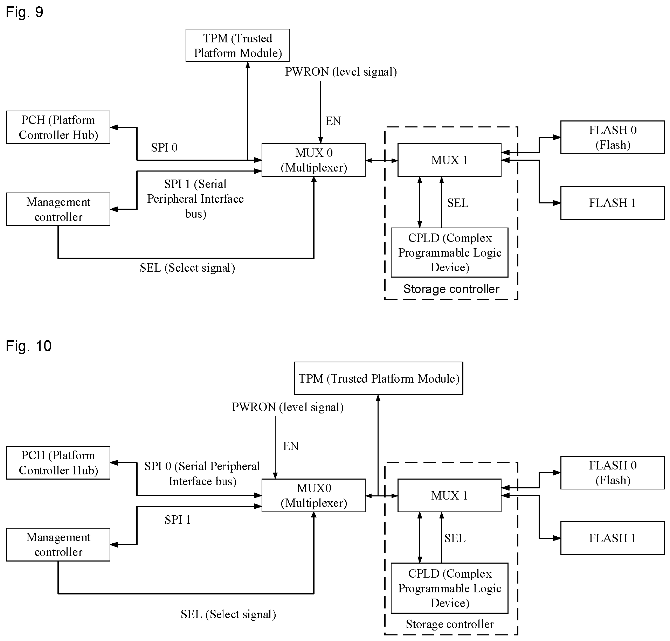

Optionally, in the example of the present disclosure, the storage controller includes the logic control device and the reference switch. The logic control device is configured to control the reference switch to adjust the state of connection or disconnection between the first port and the plurality of sub-ports corresponding to the plurality of sub-memories. The logic control period may be, but is not limited to, a complex programmable logic device (CPLD) and a field programmable gate array (FPGA), which is not limited in this solution. Fig. 9 is a sixth schematic diagram of a server boot verification system according to an example of the present disclosure. As shown in Fig. 9, the logic control device (CPLD) is connected to the reference switch (MUX1), and the first port (a port connected to the switch MUX0) and a plurality of sub-ports (ports connected to the plurality of sub-memories) are configured in the reference switch (MUX1).

Optionally, in the example of the present disclosure, in a basic input output system (BIOS) security verification system of the server, the sub-memory is assigned as a master FLASH (assumed to be a FLASH0) and a slave flash (assumed to be a FLASH 1). Under this design, operation and data interaction may be merely performed on the master FLASH when the PCH (the system controller) is booted normally and the management controller updates the BIOS firmware. At this stage, the slave FLASH is in an isolated state and does not accept direct external access for guaranteeing the security and stability of data. The CPLD may periodically synchronize the data of the FLASHO to the FLASH1, thus isolating the direct operation of the PCH and the management controller on the FLASH1, and guaranteeing the security and stability of the data of the FLASH1.

Optionally, in the example of the present disclosure, when the FLASHO fails to pass the verification of the TPM due to abnormal work of the FLASHO or abnormal refresh of the management controller, the CPLD may switch authority of the FLASH, switch the FLASH1 to the master LFASH for normal use of the system, and switch the FLASHO to the slave FLASH for guaranteeing stable running of the machine and further isolating influence of data abnormality of the FLASHO on the system. In addition, the CPLD may report an abnormal event to the system and notify operation and maintenance personnel of timely measure taking.

Through the configuration, a combination of the logic control device and the reference switch provides advanced data access control and storage resource management capabilities for the system for verifying server security. Thus, the security, the stability, and management efficiency of the system are significantly improved.

As an optional example, the logic control device is configured to select one or more first sub-memories in an unoccupied state from the sub-memories in a case where the request for accessing the sub-memory is received, and select the target sub-memory, whose a calling priority is higher than or equal to a target priority, from the first sub-memories according to priority information of the sub-memories in a case where the first sub-memories are selected. The priority information is determined according to a storage performance of each of the sub-memories.

Optionally, in the example of the present disclosure, when the logic control device receives the request for access to the sub-memory, the logic control device performs screening for all first sub-memories that are in the unoccupied state, that is, sub-memories that are not currently undergoing reading and writing. In a case where merely one first sub-memory is provided, the logic control device determines that the only first sub-memory is the target sub-memory. In a case where the plurality of first sub-memories are provided, the logic control device further performs screening according to the priority information of each sub-memory. The priority information is determined according to the storage performance of the sub-memory, such as a reading and writing speed, a storage capacity, and data access delay of the memory. Then, the logic control device screens the first sub-memories that are not occupied and have the priority higher than or equal to the target priority for an optimal target sub-memory.

Through the configuration, with an intelligent screening and priority management mechanism of the logic control device, the system for verifying server security can efficiently and safely invoke the sub-memory, and guarantee the data security and system stability at the boot stage and in the firmware update process.

As an optional example, the logic control device is further configured to detect an occupied state of each second sub-memory in a case where the request is a request for updating the boot firmware, the second sub-memory is a memory in the sub-memories excluding the target sub-memory; and update updated boot firmware stored in the target sub-memory to the second sub-memory in a case where the second sub-memory is in an unoccupied state.

Optionally, in the example of the present disclosure, the logic control device may check, in a case where the request for update of the boot firmware is received, the occupied states of all the second sub-memories (that is, sub-memories except the target sub-memory) in order to guarantee that another unoccupied sub-memory may be configured as backup or subsequent update after the firmware update of the target sub-memory. Then, in a case where one or more second sub-memories are detected at the unoccupied state, the logic control device may update the updated boot firmware stored in the target sub-memory to the second sub-memory.

Through the configuration, redundant firmware backup is provided for the server, and even if the target sub-memory fails, the system can be booted normally through the second sub-memory. Thus, the stability and availability of the server are improved.

As an optional example, the logic control device is further configured to obtain an access failure frequency at which each of the sub-memories has an access failure when accessed before a current moment; rank the sub-memories in ascending order of the access failure frequency, to obtain an access order of the sub-memories; and determine that the access order is the priority information of the sub-memories when the sub-memories are accessed.

Optionally, in the example of the present disclosure, the logic control device may continuously monitor the access history of each sub-memory, and record a number of failures when the sub-memory is accessed within a particular time window, including but not limited to a data reading failure, writing delay, and a data integrity verification failure. Then, the access failure frequency of each sub-memory is comprehensively extracted. Based on the obtained access failure frequency data, the logic control device ranks the plurality of sub-memories in ascending order of the access failure frequency, so as to obtain the access order of the plurality of sub-memories, and determine that the access order is the priority information of the plurality of sub-memories when the plurality of sub-memories are accessed. In addition, the priority of the sub-memories may also be adjusted in real time along with a dynamic change of the failure frequency. For example, the failure frequency of a currently accessed sub-memory is detected to suddenly increase during the access to the sub-memory, the logic control device may immediately reduce the priority immediately, and isolate the sub-memory from a normal access list when the failure frequency of the sub-memory is higher than a particular threshold, so as to avoid further influence on the system.

Optionally, in the example of the present disclosure, Fig. 9 is a sixth schematic diagram of a server boot verification system according to an example of the present disclosure. As shown in Fig. 9, when the boot firmware of the server system needs to be upgraded online, the management controller may transmit the signal SEL to the MUX0 (the switch), and then the MUX0 may control the management controller to be connected to the storage controller. After receiving the request for access to the sub-memory, the storage controller screens the plurality of sub-memories for the target sub-memory according to the priority information of the sub-memories. Then, in the firmware update process, the management controller may safely write new firmware data to the target sub-memory. When the firmware update is completed on the target sub-memory (such as the FLASH0), the logic control device (CPLD) starts to perform redundant backup of the firmware data among the sub-memories. At first, the CPLD may detect a current occupied state of another sub-memory (that is, the second sub-memory, such as the FLASH1) except the target sub-memory in the system. In a case where the second sub-memory is unoccupied, the CPLD may transmit a control signal to the MUX1 (the reference switch), adjust a state of connection between the MUX1 and the sub-memory, and switch a data path from the target sub-memory to the second sub-memory. Then, the CPLD updates the updated boot firmware stored in the target sub-memory to the second sub-memory. When the server is in the booted state, the MUX0 may disconnect the management controller from the MUX1, and switch the link to control the PCH to be connected to the MUX1. Then, the PCH accesses the TPM (the target verifier), obtains the target verification information stored in the TPM, and performs the integrity and validity verification on the target boot firmware in the target sub-memory, thus guaranteeing that the firmware data completely match the verification information. In a case where the verification passes, the PCH may be allowed to boot the server by using the target boot firmware. If the target boot firmware in the target sub-memory fails to pass the verification, the CPLD may automatically switch a data access link between the MUX1 and the sub-memory according to preset priority information of the sub-memory, so as to connect the second sub-memory in a normal state to the MUX1. Then, the PCH can perform the boot by using the boot firmware in the second sub-memory, thus guaranteeing that the server can recover quickly in a case of a failure of the memory and maintaining stable running of the system. In addition, during the running of the server, the CPLD may continuously monitor the states and the failure frequencies of all the sub-memories, and dynamically adjust the priority information. Thus, it is guaranteed that the system can select the optimal sub-memory for data access according to latest performance data and a latest health state.

Through the configuration, the system for verifying server security can complete the firmware update safely and efficiently, and can further shorten system interruption time caused by abnormality of a particular memory through a data redundancy synchronization and failover strategy, and improve the stability and the security of the server in a complex running environment.

As an optional example, the target verifier is connected to a connection link between the storage controller and the switch, reference verification information of the server system is further stored in the target verifier, and the reference verification information is configured to indicate firmware data of boot firmware allowed to be written to the memory.

The management controller is configured to access the target verifier in a case where the boot firmware stored in the memory is to be updated, perform verification on reference boot firmware to be updated to the memory by using the reference verification information, and access the memory and update the reference boot firmware to the memory in a case where the reference boot firmware passes the verification.

Optionally, in the example of the present disclosure, Fig. 10 is a seventh schematic diagram of a server boot verification system according to an example of the present disclosure. As shown in Fig. 10, the target verifier (TPM) is connected to the connection link between the storage controller and the switch (MUXO). In the TPM, the target verification information used for indicating the firmware data condition of boot firmware allowed to be used when the server system is booted is stored, and the reference verification information used for indicating the firmware data of the boot firmware allowed to be written to the memory is further stored.

Optionally, in the example of the present disclosure, the TPM is arranged on the connection link between the MUX0 and the storage controller. Thus, it is guaranteed that the PCH and the management controller can directly access the TPM without frequent switch of the data path of the MUX0, the frequency and complexity of data switch are reduced, and the efficiency and the stability of data transmission are improved. For the BIOS upgrade or BIOS boot, the validity and integrity verification can be performed on the boot firmware by directly accessing the TPM.

Through the configuration, the target verifier is connected to the connection link between the storage controller and the switch. Thus, it can be guaranteed that the system controller and the management controller can directly access the TPM, the processing load of the switch is reduced, and resource consumption of the server system is reduced.

As an optional example, the target verifier is connected to a connection link between a sub-memory and a sub-port corresponding to the sub-memory, reference verification information of the server system is further stored in the target verifier, and the reference verification information is configured to indicate firmware data of boot firmware allowed to be written to the memory.

The management controller is configured to access the target verifier in a case where the boot firmware in the memory is to be updated, perform verification on reference boot firmware to be updated to the memory by using the reference verification information, and access the target sub-memory and update the reference boot firmware to the target sub-memory in a case where the reference boot firmware passes the verification.

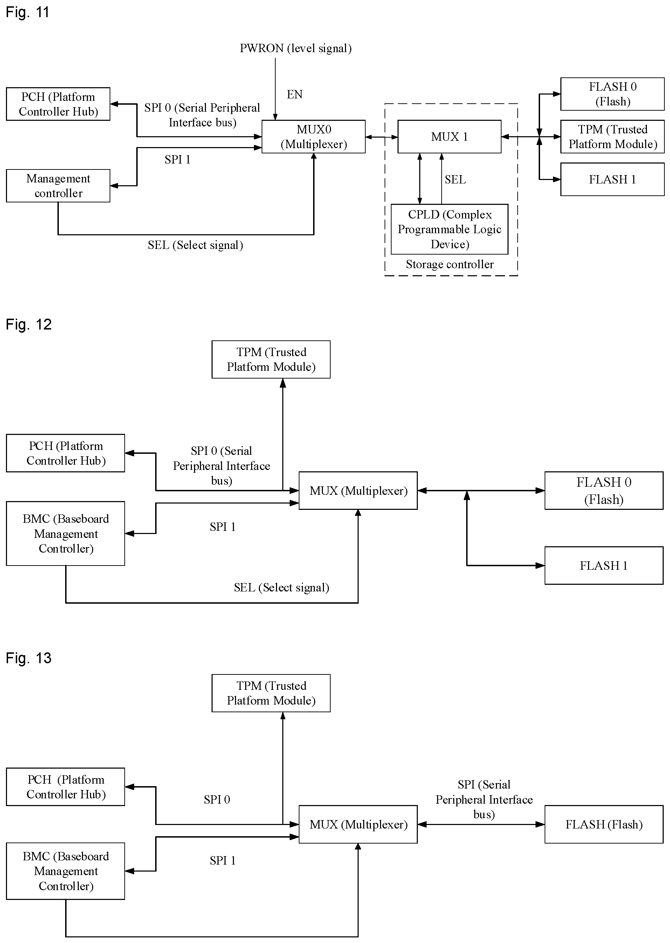

Optionally, in the example of the present disclosure, Fig. 11 is an eighth schematic diagram of a server boot verification system according to an example of the present disclosure. As shown in Fig. 11, the target verifier (TPM) is connected to the connection link between the sub-memory and the corresponding sub-port. Thus, the TPM can directly participate in verification on the firmware data stored in the sub-memory without transferring through the switch, the data path is simplified, and delay and potential errors in the data transmission process are reduced.

Optionally, in the example of the present disclosure, the TPM and the plurality of sub-memories are arranged behind the SPI bus MUX1 (the reference switch), and then the TPM may monitor the integrity and validity and perform the integrity and validity verification on the firmware data in the sub-memory in real time. When the BIOS is upgraded online, the upgrade of the BIOS firmware requires the server to enter an S5 state (a standby (STBY) state), a PWRON signal is at a low level, and then an MUX0 chip is controlled to switch to the management controller. Thus, it is guaranteed that the SPI bus is under control by the management controller and is completely isolated from the PCH. The management controller selects a first FLASH through the signal SEL to guarantee that the SPI path from the management controller to the FLASHO is connected, and then loads a burned file of a BIOS firmware file (BIOS FW). Then, the management controller invokes a HASH verification value of the TPM and performs the security and validity verification on the burned file of the BIOS FW. After the verification passes, the management controller is allowed to burn the BIOS FW file into the FLASH0. After successful burning, the management controller selects the SPI bus of the FLASH1 through the signal SEL, and then repeats the previous step. By burning the BIOS FW file into the FALSH1, it is guaranteed that the BIOS FW files in two FLASH dies are consistent. During running of the server, when the enabled FLASH is tampered with or the integrity verification on the FW fails probably, switch may be performed to another FLASH for the boot. Thus, the server BIOS is guaranteed to be booted normally, and the security and stability of the server are improved.

In a normal boot scenario of the server, when the server is powered on, the PWRON signal is at the high level, the MUX0 is controlled to switch to the PCH, and the connection of the management controller is completely isolated, thus guaranteeing the security of the path and avoiding the risks of tampering with the BIOS FW by the management controller path. In this case, the PCH may load the BIOS FW from the FLASH0, and perform the integrity and validity verification on the BIOS FW through the TPM. When the verification passes, the PCH may run the BIOS FW until the server is booted normally. When the verification fails, the PCH may switch to the FLASH1 through the signal SEL, and the same integrity and validity verification on FW is performed. If the verification passes, the boot is continuously performed. If the verification fails, the server boot is prohibited, and a user is informed that the BIOS of the server is abnormal and cannot be booted, and measures need to be taken as soon as possible.

Through the configuration, with the design that the target verifier is directly connected between the sub-memory and the corresponding sub-port, the data transmission path can be simplified, and complicated switch of data among components such as the switch can be avoided. In addition, through the real-time security verification, a defense capacity of the server system facing a firmware security threat is effectively improved.

Optionally, in the example of the present disclosure, a system for security verification of a BIOS of a server is further provided. Fig. 12 is a first schematic diagram of the system for security verification of a BIOS of a server according to an example of the present disclosure. As shown in Fig. 12, dies of a PCH (a system controller), a BMC (a management controller), a TPM (a target verifier), and a FLASH (a memory) are connected through an SPI bus, and the TPM is directly connected to the PCH. The BMC and the PCH may access the BIOS FLASH in a time-division way through the MUX (the switch) switch, and upgrade the BIOS FW (the boot Firmware). However, the BMC may not interact with the TPM. For the FLASH of the BIOS, a FLASHO and a FLASH1 are arranged. When one FLASH works abnormally or the BIOS FW in the FLASH fails to pass verification by the TPM, automatic switch may be performed to another flash for a boot. When the two FLASHes corrupt or fail to pass verification, the server refuses to be booted, and a user is informed that the BIOS FLASH is corrupted or tampered with. Through arrangement of double BIOS FLASHes, hard backup of the BIOS FW can be implemented, guaranteeing the security and the stability of the BIOS.

When the BIOS FW needs to be upgraded online, the MUX chip of the SPI may be controlled through the BMC, the SPI bus is switched to the BMC, and then the BIOS FW is burned into the FLASH. The BIOS FWs of two FLASHes are upgraded as required, thus improving convenience.

When the BIOS FW is upgraded online, if there is illegal operation or tampering with the FLASH information, the FW file may still be written to the FALSH die, which results in the problem that the server cannot be booted normally due to information tempering or firmware corruption of the BIOS, and poses a great threat to the security and reliability of the server. Since the BMC may not access the TPM during online upgrade, whether the upgraded file of the BIOS FW is complete and legal cannot be verified, the BMC merely performs the integrity verification on the BIOS FW file, and the security and validity of the updated file of the BIOS FW cannot be guaranteed.

Fig. 13 is a second schematic diagram of a system for security verification of a BIOS of a server according to an example of the present disclosure. As shown in Fig. 13, a single BIOS FLASH of the TPM module is connected to the BMC and the PCH through the SPI bus, and the two modules are switched through the MUX, thus guaranteeing that the PCH and the BMC can access the BIOS FLASH. However, merely the PCH may access the TPM, and BMC cannot access the TPM normally. Thus, it is guaranteed that the validity and integrity verification on the FW can be performed through the TPM for the BIOS boot, and the security of the server during the boot and running are guaranteed.

The PCH and the BMC may communicate with the BIOS FLASH by switching the MUX chip. This solution can merely guarantee the integrity and validity of the BIOS FW during the BIOS boot. That is, during the BIOS boot, verification may be performed on the BIOS by the TPM, and the BIOS may be allowed to be booted normally after the verification passes. In a case where the BIOS is illegally tampered with or the BIOS FW is corrupted, the verification is abnormal and fails in other words, the BIOS boot may be prohibited, and the safety and the validity of BIOS boot are guaranteed.

When the BIOS is upgraded through the BMC, the BMC switches the MUX to be connected to the BMC through the signal SEL, such that the FW file of BIOS FLASH may be directly burned with involving merely the integrity verification on the burned file of the BIOS FW by the BMC. Since access to the TPM cannot be performed, the BIOS FW may be directly burned or modified, and the validity verification on the BIOS FW may be merely performed during the boot after complete burning. If the BIOS FW is illegally modified in this case, the system may not be able to intercept this behavior, which may eventually lead to abnormal tempering of the server, the failure of the validity verification, and the boot failure. As a result, the security and stability of the server are affected.

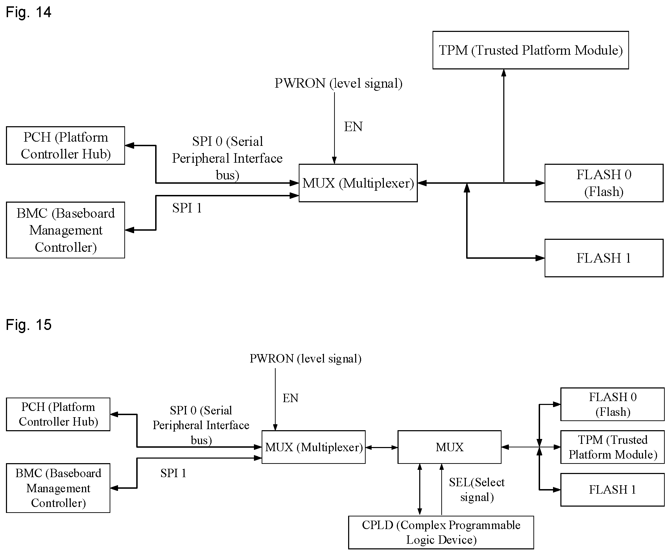

Fig. 14 is a first schematic diagram of an optimized system for security verification of a BIOS of a server according to an example of the present disclosure. As shown in Fig. 14, a TPM module and two BIOS FLASHes are set behind an SPI bus MUX, such that a PCH and a BMC are guaranteed to access the TPM, validity and integrity verification on the FW can be performed on an FW through the TPM for BIOS upgrade or a BIOS boot, and security of a server is guaranteed during the upgrade and boot.

The two BIOS FLASHes and the TPM are directly connected through the SPI bus, such that the TPM can monitor and verify integrity and validity of data of two FLASHes in real time. When the BIOS is upgraded online, the upgrade of the BIOS FW requires the server to enter an S5 state (a STBY state), a PWRON signal is at a low level, and then an MUX chip is controlled to switch to the BMC. Thus, it is guaranteed that the SPI bus is under control by the BMC and is completely isolated from the PCH. The BMC selects a first FLASH through the signal SEL to guarantee that the SPI path from the BMC to the FLASHO is connected, and then loads a burned file of the BIOS. Then, the BMC invokes a HASH verification value of the TPM and performs the security and validity verification on the burned file of the BIOS FW. After the verification passes, the BMC is allowed to burn the BIOS FW file into the FLASH0. After successful burning, the BMC selects the SPI bus of the FLASH1 through the signal SEL, and then repeats the previous step. By burning the BIOS FW file into the FALSH1, it is guaranteed that the BIOS FW files in two FLASH dies are consistent. During running of the server, when the enabled FLASH is tampered with or the integrity verification on the FW fails probably, switch may be performed to another FLASH for the boot. Thus, the server BIOS is guaranteed to be booted normally, and the security and stability of the server are improved.

In a normal boot scenario of the server, when the server is powered on, the PWRON signal is at the high level, the MUX is controlled to switch to the PCH, and the connection of the BMC is completely isolated, thus guaranteeing the security of the path and avoiding the risks of tampering with the BIOS FW by the BMC path. In this case, the PCH may load the BIOS FW from the FLASH0, and perform the integrity and validity verification on the BIOS FW through the TPM. When the verification passes, the PCH may run the BIOS FW until the server is booted normally. When the verification fails, the PCH may switch to the FLASH1 through the signal SEL, and the same integrity and validity verification on FW is performed. If the verification passes, the boot is continuously performed. If the verification fails, the server boot is prohibited, and a user is informed that the BIOS of the server is abnormal and cannot be booted, and measures need to be taken as soon as possible.

In a normal running scenario of the server, the PWRON signal is always at a high level, and the SPI path is always kept as PCH connection, thus performing real-time integrity and validity verification on the data. After the normal boot, the PCH has a unique control right and cannot be modified, thus avoiding the risk of BMC tampering and BIOS FW or data corruption.

The arrangement of dual BIOS FLASHes guarantees the hardware redundancy design of the BIOS FW and improves the security and stability of the server. By setting the access of the BMC to the TPM path, the security and validity of online update of the BIOS FW file are guaranteed, and the BIOS is prevented from being tampered with and corrupted.

Fig. 15 is a second schematic diagram of an optimized system for security verification of a BIOS of a server according to an example of the present disclosure. As shown in Fig. 15, three hosts involved in topology: reading and writing of two flashes by PCH\BMC\CPLD (a logic control device) need verification by the TPM.

A FLASHO is a master FLASH, a FLASH 1 is a slave FLASH. The PCH accesses the flash and performs data interaction during a normal boot, or the BMC upgrades the bios FW and may merely operate the master FLASH, namely the flash0. The FLASH1 is the slave FLASH, and the CPLD may periodically synchronize data of the FLASHO to the FLASH1, thus isolating direct operation of the PCH and the BMC on the FLASH1, and guaranteeing the security and stability of data of the FLASH1.

When the FLASH fails to pass the verification of the TPM due to abnormal work of the FLASHO or abnormal refresh of the BMC, the CPLD may switch authority of the two FLASHes, switch the FLASH1 to the master LFASH for normal use of the system, and switch the FLASHO to the slave FLASH for guaranteeing stable running of the machine and further isolating influence of data abnormality of the flash on the system. In addition, the CPLD may report an abnormal event to the system and notify operation and maintenance personnel of timely measure taking.

Reference can be made to instances described in the examples and illustrative embodiments described above for specific instances in this example, which will not be repeated in this example.

Apparently, a person skilled in the art should understand that the modules or steps described above of the present disclosure may be implemented by a general-purpose computation apparatus, may be centralized on a single computation apparatus or distributed over a network formed by a plurality of computation apparatuses, and may be implemented through program codes executable by the computation apparatus. Thus, the modules or steps may be stored in a storage apparatus and executed by the computation apparatus, and in some cases, the steps shown or described may be executed in a sequence different from a sequence described herein, or the steps can be separately made into integrated circuit modules, or a plurality of modules or steps among the steps may be made into a single integrated circuit module to be implemented. In this way, the present disclosure is not limited to any specific hardware and software combination.

The examples are merely preferred examples of the present disclosure and are not intended to limit the present disclosure, and for those skilled in the art, various modifications and changes can be made to the present disclosure. Any modification, equivalent substitution, improvement, etc. made according to principles of the present disclosure should fall within the protection scope of the present disclosure.

## Claims

1. A server boot verification system, comprising:
a system boot device and a target verifier, wherein the system boot device comprises a system controller, a management controller, a switch, and a memory; the management controller, the system controller, and the memory are connected to the switch, and the target verifier is connected to the system boot device; target boot firmware of a server system is stored in the memory, and target verification information of the server system is stored in the target verifier; and the target verification information is configured to indicate firmware data of boot firmware allowed to be used when the server system is booted;
the switch is configured to control the system controller to connect with the memory in a case where the server system is booted, and control the management controller to connect with the memory in a case where boot firmware stored in the memory is to be updated; and
the system controller is configured to access the target verifier and the memory in a case where the server system is booted, and perform verification on the target boot firmware by using the target verification information.

2. The system according to claim 1, wherein the target verifier is configured to perform security verification on the target boot firmware stored in the memory at a boot stage of the server system and an update stage of firmware data in the memory.

3. The system according to claim 1, wherein the target verifier is connected to a connection link between the system controller and the switch.

4. The system according to claim 3, further comprising a reference verifier, wherein the reference verifier is connected to a connection link between the management controller and the switch, reference verification information of the server system is stored in the reference verifier, and the reference verification information is configured to indicate firmware data of boot firmware allowed to be written to the memory; and
the management controller is configured to access the reference verifier in a case where the boot firmware stored in the memory is to be updated, perform verification on reference boot firmware to be updated to the memory by using the reference verification information, and access the memory and update the reference boot firmware to the memory in a case where the reference boot firmware passes the verification.

5. The system according to claim 4, wherein
the management controller is configured to transmit a switch signal to the switch in a case where the boot firmware stored in the memory is in a to-be-updated state;
the switch is configured to control the management controller to connect with the memory in response to the switch signal; and
the management controller is configured to access the reference verification information stored in the reference verifier and use the reference verification information to perform verification on firmware data used for update before firmware used for update is written to the memory, and allowed to write new firmware data to the memory in a case where the firmware data used for update passes the verification.

6. The system according to claim 4, further comprising a synchronization controller, wherein the synchronization controller is connected to the reference verifier and the target verifier; and
the synchronization controller is configured to match a first information version of the reference verification information with a second information version of the target verification information, and use the reference verification information to update the target verification information stored in the target verifier in a case where the first information version fails to match the second information version.

7. The system according to claim 2, wherein
the switch is configured to disconnect a connection link between the management controller and the memory, and control the system controller to connect with the memory in a case where a server is in a booted state; and
the system controller is configured to access the target verification information stored in the target verifier in a case where the server is in the booted state, perform integrity and validity verification on the target boot firmware stored in the memory by using the target verification information, and boot the server system by using the target boot firmware in a case where the target boot firmware passes the integrity and validity verification.

8. The system according to claim 1, wherein a first interface, a second interface, and a third interface are configured in the switch, the first interface is configured to be connected to the system controller, the second interface is configured to be connected to the management controller, and the third interface is configured to be connected to the memory; and
the switch is configured to control the first interface to connect with the third interface in a case where the server system is booted, and control the second interface to connect with the third interface in a case where the boot firmware stored in the memory is to be updated.

9. The system according to claim 8, wherein a fourth interface is further configured in the switch, the target verifier is connected to the fourth interface, reference verification information is further stored in the target verifier, and the reference verification information is configured to indicate firmware data of boot firmware allowed to be written to the memory; and
the switch is configured to control the first interface to connect with the fourth interface in a case where the server system is booted, control the first interface to connect with the third interface in a case where the system controller accesses the target verification information stored in the target verifier, control the second interface to connect with the fourth interface in a case where the boot firmware stored in the memory is to be updated, and control the second interface to connect with the third interface in a case where the management controller accesses the reference verification information stored in the target verifier.

10. The system according to claim 1, wherein
the memory comprises a plurality of sub-memories, and the switch is connected to each of the sub-memories; and
the plurality of sub-memories are configured to redundantly store boot firmware required to boot the server system.

11. The system according to claim 10, wherein
the memory further comprises a storage controller, a first port of the storage controller is connected to the switch, and a second port of the storage controller is connected to each of the sub-memories; and
the storage controller is configured to control an access state of each of the sub-memories.

12. The system according to claim 11, wherein
the second port of the storage controller comprises a plurality of sub-ports, and the sub-ports are connected to the sub-memories in one-to-one correspondence; and
the storage controller is configured to, in a case where a request for accessing a sub-memory from the sub-memories is received, select the accessed sub-memory as a target sub-memory from the sub-memories, and control a sub-port, from the sub-ports and connected to the target sub-memory, and the first port to be in a connection state.

13. The system according to claim 12, wherein the storage controller is further configured to detect a historical access frequency of each of the sub-memories, and determine that a memory, from the sub-memories and whose access frequency is lower than a set frequency, is the target sub-memory.

14. The system according to claim 12, wherein
the storage controller comprises a logic control device and a reference switch, the logic control device is connected to the reference switch, and the first port and the sub-ports are configured in the reference switch; and
the logic control device is configured to control the reference switch to adjust a state of connection or disconnection between the first port and each of the sub-ports.

15. The system according to claim 14, wherein
the logic control device is configured to select one or more first sub-memories in an unoccupied state from the sub-memories in a case where the request for accessing the sub-memory is received, and select the target sub-memory, whose a calling priority is higher than or equal to a target priority, from the first sub-memories according to priority information of the sub-memories in a case where the first sub-memories are selected, wherein the priority information is determined according to a storage performance of each of the sub-memories.

16. The system according to claim 14, wherein
the logic control device is further configured to detect an occupied state of each second sub-memory in a case where the request is a request for updating the boot firmware, wherein the second sub-memory is a memory in the sub-memories excluding the target sub-memory; and update updated boot firmware stored in the target sub-memory to the second sub-memory in a case where the second sub-memory is in an unoccupied state.

17. The system according to claim 15, wherein
the logic control device is further configured to obtain an access failure frequency at which each of the sub-memories has an access failure when accessed before a current moment; rank the sub-memories in ascending order of the access failure frequency, to obtain an access order of the sub-memories; and determine that the access order is the priority information of the sub-memories when the sub-memories are accessed.

18. The system according to claim 11, wherein
the target verifier is connected to a connection link between the storage controller and the switch, reference verification information of the server system is further stored in the target verifier, and the reference verification information is configured to indicate firmware data of boot firmware allowed to be written to the memory; and
the management controller is configured to access the target verifier in a case where the boot firmware stored in the memory is to be updated, perform verification on reference boot firmware to be updated to the memory by using the reference verification information, and access the memory and update the reference boot firmware to the memory in a case where the reference boot firmware passes the verification.

19. The system according to claim 12, wherein
the target verifier is connected to a connection link between a sub-memory and a sub-port corresponding to the sub-memory, reference verification information of the server system is further stored in the target verifier, and the reference verification information is configured to indicate firmware data of boot firmware allowed to be written to the memory; and
the management controller is configured to access the target verifier in a case where the boot firmware stored in the memory is to be updated, perform verification on reference boot firmware to be updated to the memory by using the reference verification information, and access the target sub-memory and update the reference boot firmware to the target sub-memory in a case where the reference boot firmware passes the verification.

20. The system according to claim 11, wherein the target verifier is connected to a reference switch, and reference verification information of the server system is further stored in the target verifier.
